# EUROPÄISCHE PATENTANMELDUNG

(11) **EP 1 408 022 A1**
(43) Veröffentlichungstag der Anmeldung: **14.04.2004**
(21) Anmeldenummer: 03022407.5
(22) Anmeldetag: 07.10.2003
(51) Int. Cl.: C05F 17/02

(54) **Verfahren zum Betrieb einer mehrstufigen Kompostieranlage und eine nach dem Verfahren arbeitende Anlage**

(30) Priorität: 07.10.2002 DE 10246714
(71) Anmelder: VKW Anlagenbau und Umwelttechnik GmbH, 6901 Bregenz (AT)
(72) Erfinder: Müller, Peter, 6804 Feldkirch (AT)
(74) Vertreter: Riebling, Peter, Dr.-Ing.

(57) **Zusammenfassung**

Es wird ein Verfahren zum Betrieb einer mehrstufigen Kompostieranlage beschrieben, bei dem das Rottegut in einem hermetisch abgeschlossenen Kompostiermodul (1) lagert und nach Ablauf der Lagerzeit in ein weiteres Kompostiermodul verbracht wird.

Um einen besseren Rotteablauf zu erreichen und um zu gewährleisten, dass keine unerwünschten Emissionen auftreten, ist vorgesehen, dass das Rottegut in das Kompostiermodul an der einen Seite eingetragen und an der gegenüberliegenden Seite ausgetragen wird und dass mehrere Kompostiermodule in Serie hintereinander geschaltet sind und wahlweise ein Durchlauf und/oder ein Umlaufbetrieb möglich ist.

## Beschreibung

Die Erfindung betrifft ein Verfahren zum Betrieb einer mehrstufigen Kompostieranlage und eine Kompostieranlage zur Ausführung dieses Verfahrens.

Mehrstufige Kompostieranlagen werden verwendet, um große Mengen von Rottegut zu kompostieren. Derartiges Rottegut besteht vorwiegend aus Grünabfällen, Bioabfällen oder organischen Anteilen aus Restabfällen. Es ist bekannt, dass Rottegut mehrstufig zu kompostieren, wobei jeder Stufe ein eigenes Kompostiermodul zugeordnet ist. Das Rottegut wird hierbei in ein erstes Kompostiermodul eingeführt und dort für eine gewisse Zeit liegen gelassen, bis es den geforderten Verrottungszustand erreicht hat. Nach Erreichen dieses Zustandes wird das Rottegut aus dem ersten Kompostiermodul entfernt und in ein zweites Kompostiermodul übergeben. Auf diese Weise ist es bekannt, mehrere Kompostiermodule hintereinander in Serie zu schalten.

Hierbei wird das Rottegut aus dem ersten Kompostiermodul entnommen, in das zweite Kompostiermodul eingeführt, wo es aus diesem entnommen und in das dritte Kompostiermodul eingeführt wird usw.

Ein solcher Durchlaufbetrieb ist demnach bei verschiedenen, bekannten Tunnelkompostierern möglich. Das Rottegut wird an der einen Seite des Tunnelkompostierers eingetragen und an der gegenüberliegenden Seite ausgetragen.

Die Verarbeitungszeit ist beim Durchlaufbetrieb nur in engen Grenzen veränderbar, weil das zu verarbeitende Rottegut einen fortlaufenden Produktstrang bildet. Zur Verarbeitung einer vorgegebenen Produktmenge ist daher ein hoher Maschinenaufwand erforderlich.

Der Erfindung liegt deshalb die Aufgabe zugrunde, die vorhandenen Maschinen auch mehrfach nutzen zu können und in kürzerer Zeit eine bessere Verarbeitung des Rottegutes erreichen zu können.

Zur Lösung der gestellten Aufgabe ist die Erfindung durch die technische Lehre des Anspruches 1 gekennzeichnet.

Die Erfindung sieht vor, dass das Rottegut im Umlaufbetrieb gefördert wird, sodass es mehrfach im Kreislauf in ein und demselben Kompostiermodul oder auch in mehreren Kompostiermodulen umgewälzt wird.

Das Rottegut wird unter Luftabschluss über einen Eintrag in das erste Kompostiermodul eingetragen, verrottet dort für eine bestimmte Zeit und wird über die in dem Kompostiermodul eingebaute Fördertechnik, z. B. einem Transportboden, welcher das Kompostiergut in Austragsrichtung fördert, in Richtung auf den Austrag schrittweise transportiert, wo es dann nach einer gewissen Lagerzeit ausgetragen und in den Eingang des darauf folgenden Kompostiermoduls eingespeist wird.

Diese Serienschaltung der einzelnen Kompostiermodule, wobei jeweils der Ausgang des vorhergehenden Kompostiermoduls mit dem Eingang des darauf folgenden Kompostiermoduls verbunden ist, hat den Vorteil, dass die Kompostiermodule auch wahlweise beschickt werden können oder auch nicht.

Alle Eingänge der Kompostiermodule sind nämlich nach einem weiteren Verfahrensmerkmal parallel zueinander geschaltet und über eine gemeinsame Eintragsstrecke miteinander verbunden, was ebenfalls für die Austräge gilt, die ebenfalls parallel über eine gemeinsame Austragsstrecke verbunden sind. Dank dieser Parallelschaltung ist es nun möglich, beispielsweise das erste Kompostiermodul zu überspringen und über die parallel geschaltete Eintragsstrecke sofort das zweite Kompostiermodul und dessen Eintrag zu beschicken, wobei damit das erste Kompostiermodul aus der Verrottungsstrecke herausgenommen wird.

Gleiches gilt selbstverständlich auch für jedes beliebige andere Kompostiermodul, weil ja alle Einträge und Austräge dieser Kompostiermodule parallel geschaltet sind.

Sollte sich also beispielsweise in dem ersten Kompostiermodul ein maschinentechnischer Schaden ergeben oder das Rottegut verdorben sein, so kann dieses Kompostiermodul aus der Verrottungsstrecke entnommen werden und das zu verarbeitende Rottegut wird nun sofort in das nachgeschaltete, zweite Kompostiermodul eingeführt und dort der weiteren Verrottung zugeführt.

Ein weiterer Vorteil der verfahrensgemäßen Serienschaltung der einzelnen Kompostiermodule liegt darin, dass der sich durch das Kompostierverfahren ergebende Rotteverlust automatisch ausgeglichen wird. Beim Stand der Technik wurde das erste Kompostiermodul mit einem bestimmten Volumen befüllt und aufgrund des Rotteprozesses erfolgt eine entsprechende Volumenverminderung, weil die verrottenden Stoffe Wasserdampf und Gase freigeben und dadurch ein Substanzverlust entsteht.

Das in die ersten Kompostiermodule eingefüllte Volumen verringerte sich also nach einer gewissen Rottezeit um beispielsweise ein Drittel und wurde dann als vermindertes Volumen in das zweite, nachgeschaltete Kompostiermodul eingeführt, wo wiederum ein Drittel des Volumens verloren ging. Nach einer Reihe von Verrottungsprozessen in unterschiedlichen Kompostiermodulen wurde am Ende nur eine sehr geringe Menge des kompostierten Materials gewonnen. Dieser Nachteil wird bei der Erfindung vermieden.

Bei der Erfindung ist vorgesehen, dass die Austragsmenge von dem ersten Kompostiermodul auf den Eintrag des zweiten Kompostiermoduls stets gleich bleibend ist. Es wird jedoch beim zweiten Kompostiermodul die Fördergeschwindigkeit des Transportbodens vom Eintrag in Richtung auf den Austrag vermindert, so dass am Eintrag eine vergrößerte Volumenmenge pro Zeiteinheit eingetragen wird, die dann dazu führt, dass das Kompostiermodul mit vollem Nutzvolumen arbeiten kann. Dies ist ein wesentlicher Vorteil des Verfahrens im Vergleich zum Stand der Technik.

Eine Vorrichtung zur Verwirklichung der erfindungsgemäßen Hintereinanderschaltung der Kompostiermodule besteht im wesentlichen darin, dass man ein Kompostiermodul schafft, das über einen Eintragsförderer auf einen Transportboden aufgibt, welcher Transportboden das Rottegut schrittweise oder kontinuierlich gegen einen Austrag fördert, wo das Rottegut über einen Austragsförderer entnommen und einem Umsetzförderer zugeführt wird, welcher dem Austrag des ersten Kompostiermoduls mit dem Eintrag des nachgeschalteten zweiten Kompostiermoduls verbindet.

Erfindungsgemäß ist vorgesehen, dass jedes Kompostiermodul wahlweise auch mindestens zeitweilig im Umlaufbetrieb arbeitet.

Dies bedeutet, dass das von dem Eintrag in das Kompostiermodul eingetragene Rottegut über den schrittweise oder kontinuierlich angetriebenen Transportboden gegen den Austrag gefördert wird und dass am Austrag an dem Austragsförderer ein Umsetzförderer ansetzt, der das dort aufgegebene Rottegut wieder dem Eintragsförderer zuführt.

Auf diese Weise kann wahlweise das Kompostiermodul im Durchlaufbetrieb oder im Umlaufbetrieb betrieben werden.

Vorrichtungstechnisch besteht das Kompostiermodul aus einem in sich abgeschlossenen Kasten, der beispielsweise als Tunnel ausgebildet ist. Über hermetisch abschließbare Eintrags- und Austragsöffnungen wird das Rottegut unter Luftabschluss in diesem Kompostiermodul im Kreislauf gefördert. Es kann aber auch ein reiner Durchlaufbetrieb vorgesehen werden. Das Rottegut wird beispielsweise über einen Eintragsförderer eingetragen, der quer über den Kasten gelegt ist und der mehrere Auswurföffnungen aufweist. Der Eintragsförderer kann beispielsweise als Kettenförderer, als Schneckenförderer, als Bandförderer, als Vibrationsförderer oder als jegliche andere Fördervorrichtung ausgebildet sein.

Das über die Auswurföffnungen in den Kasten gelangende Rottegut wird nun über einen Transportboden in Richtung der Längsachse des Kastens schrittweise oder kontinuierlich geführt. Hierfür werden erfindungsgemäß unterschiedliche Transportsysteme verwendet.

Neben einem Gurtförderer, welcher den Boden des Kastens bildet, können auch sogenannte Lamellenförderer verwendet werden. Bei diesen Lamellenförderern werden mittels eines Schubantriebes die in der bodenseitigen Ebene des Kastens aneinander liegenden Lamellen von der Eintrags- zur Austragsseite hin verschoben, so dass stets eine Lamelle an der Austragsseite herunterfällt und mit einer Transporteinrichtung auf die Eintragsseite gebracht wird. Auf diese Weise wird das auf den Lamellen ruhende Rottegut in Längsrichtung des Kastens in Richtung auf den Austrag gefördert.

Es kann in einer bevorzugten Weiterbildung der Erfindung vorgesehen sein, dass das sich in Austragsnähe befindende Rottegut noch zusätzlich mit einer Fräsvorrichtung bearbeitet wird, um einen günstigen Materialaufschluss und eine gewisse Materialgröße zu erhalten.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Fig. 1:: schematisiert die Draufsicht auf ein Kompostiermodul;
- Fig. 2:: schematisiert in Seitenansicht das Kompostiermodul nach Figur 1;
- Fig. 3:: die Draufsicht auf die Hintereinanderschaltung mehrerer Kompostiermodule zur Ausführung des Verfahrens.
- Fig. 4:: einen Tunnelblock, bestehend aus fünf Kompostiermodulen, die wahlweise
in Serie und/oder parallel geschaltet werden können,
- Fig. 5:: die Anordnung von zwei Tunnelblöcken, bestehend aus insgesamt zehn Kompostiermodulen, die jeweils wiederum wahlweise seriell oder parallel geschaltet werden können.

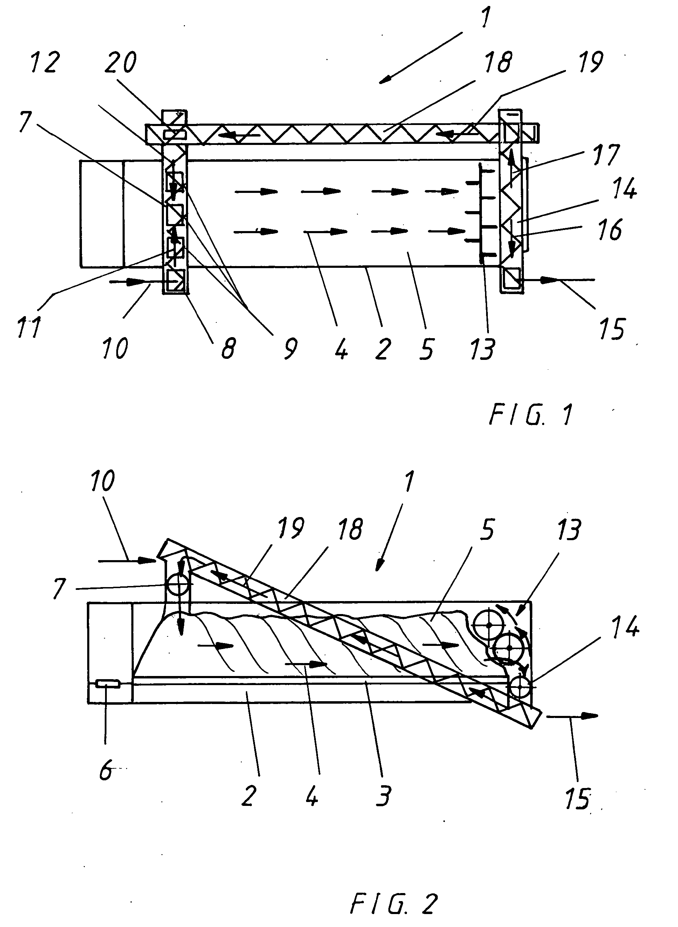

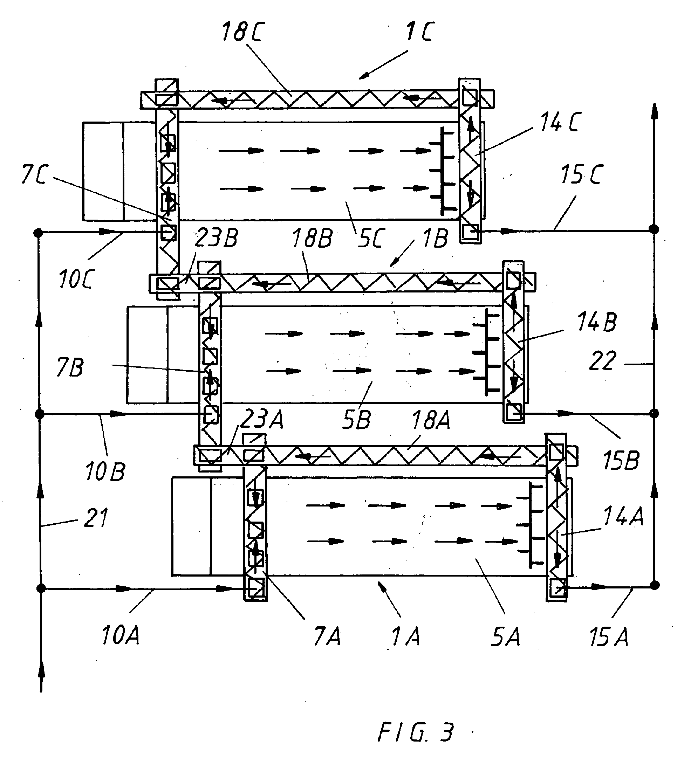

Nach Figuren 1 und 2 besteht ein Kompostiermodul 1 aus einem in sich geschlossenen Kasten 2, in dem das Rottegut 5 unter Luftabschluss gelagert ist. An der Eintragsseite des Kasten ist ein Eintragsförderer 7 angeordnet, der sich quer über die Breite des Kastens 2 erstreckt.

Der Eintragsförderer besteht beispielsweise aus einem Schneckenförderer und ist ebenfalls hermetisch dicht ausgeführt. In der abgeschlossenen Röhre des Eintragsförderers 7 sind bodenseitig mehrere, voneinander räumlich getrennte, Auswurföffnungen 9 angeordnet. Das Rottegut 5 wird nun über eine Zuführung 10 in Pfeilrichtung auf eine Übergabe 8 am Eintragsförderer 7 aufgegeben und dann in Pfeilrichtung 11 in Längsachse des Eintragsförderers 7 gefördert. Dort gelangt es über die Auswurföffnungen 9, die von Fall zu Fall geöffnet sind, so dass das Rottegut 5 gleichmäßig über die Breite des Kastens 2 verteilt auf einen Transportboden 3 aufgegeben wird. Der Transportboden wird über einen Antrieb 6 in Pfeilrichtung 4 schrittweise oder kontinuierlich angetrieben, so dass das Rottegut 5 in einem bestimmten Zeitintervall gegen den Austrag gefördert wird. Die Zeit, um das Rottegut 5 von dem Eintragsförderer 7 in Richtung auf den Austragsförderer 14 zu transportieren, beträgt beispielsweise eine Woche. Diese Zeit hängt unter anderem jedoch von der Art und der Menge des zu verarbeitenden Rottegutes 5 ab.

An der Austragsseite kann eine Fräsvorrichtung 13 angeordnet sein, die aus beispielsweise zwei, stufenweise versetzt zueinander und gleichsinnig angetriebenen, Fräswalzen besteht, welche das am Austrag ankommende Rottegut 5 auflockert, aufschließt und in eine für die Austragsvorrichtung geeignete Substanzgröße verwandelt.

Die Austragsvorrichtung besteht aus dem Austragsförderer 14, der maschinenbautechnisch gleich arbeitet, wie der Eintragsförderer 7. Das Rottegut 5 kann nun beispielsweise in Pfeilrichtung 16 dem Austrag 15 zugeführt werden, wodurch ein einfacher Durchlaufbetrieb für das Kompostiermodul 1 verwirklicht ist.

Soll ein Umlaufbetrieb verwirklicht werden, dann wird Austragsförderer 14 in seiner Förderrichtung umgeschaltet, so dass das Rottegut 5 in Pfeilrichtung 17 gefördert wird und nun einem Umsetzförderer 18 zugeführt wird, welcher das zurückzuführende Rottegut 5 in Pfeilrichtung 19 wiederum dem Eintrag zuführt. Dort ist eine Übergabe 20 vorhanden, welche das Rottegut 5 in den Eintragsförderer 14 einschleust und dieses in Pfeilrichtung 12 in dem Eintragsförderer 7 verteilt, welcher über die Auswurföffnungen 9 das Rottegut 5 wieder an der Eintragsseite in den Kasten 2 hineinfallen lässt.

Ein derartiger Umlaufbetrieb kann auch mehrmals vorgenommen werden. Die Anlagengröße kann beispielsweise für einen Durchlauf des Materials in einem Zeitintervall von zwei Wochen ausgelegt sein. Bei fünf Arbeitstagen pro Woche und einer Verarbeitungszeit von insgesamt 2 Wochen werden insgesamt zehn Chargen in das Kompostiermodul 1 eingeführt. Nun ist es vorteilhaft, dass man beispielsweise nach dem fünften und dem zehnten Tag das Material intern ein Mal umsetzt, um so den Rotteprozess zu beschleunigen und einen besseren Aufschluss des Rottegutes 5 zu erreichen.

Wenn also beispielsweise das Material des ersten Tages sich nach fünf Tagen etwa in der Mitte des Kompostiermoduls 1 befindet, wird das gesamte im Kompostiermodul enthaltene Material ein Mal vollständig umgesetzt, wodurch es zu einem besseren Aufschluss des gesamten Rottegutes 5 kommt.

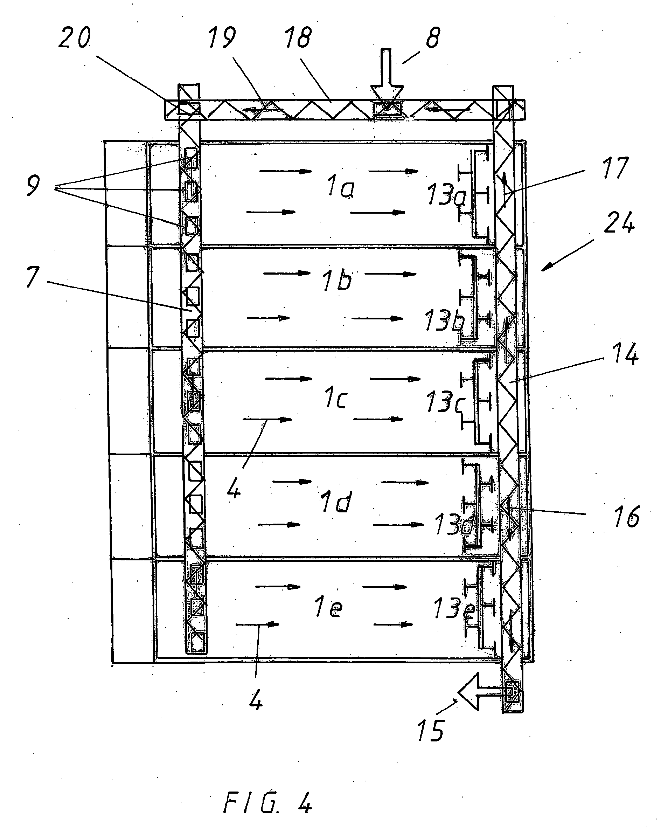

Eine derartige Anlage ist in Figur 3 dargestellt, bei der wahlweise alle Kompostiermodule im Durchlaufbetrieb arbeiten können; bei der aber auch wahlweise eines oder mehrere oder alle Kompostiermodule im Umlaufbetrieb arbeiten.

Es wird demnach selbstständiger Schutz für ein Verfahren beansprucht, bei dem die Kompostiermodule 1a, 1b, 1c nach Figur im Durchlaufbetrieb arbeiten und selbstständiger Schutz dafür, dass einige der Kompostiermodule oder alle Kompostiermodule im Durchlauf und/oder Umlaufbetrieb arbeiten.

Über die Zuführung 10a wird das zu verrottende Gut 5 dem ersten Kompostiermodul 1 zugeführt und dort in der Weise verarbeitet, wie es anhand der Figuren 1 und 2 beschrieben wurde.

Nach Beendigung der Rottezeit in dem ersten Kompostiermodul 1a wird das Rottegut 5 über den Umsetzförderer 18a im Eintragsförderer 7b des nächsten Kompostiermoduls 1 b zugeführt.

Hierbei ist maschinenbautechnisch vorgesehen, dass der Umsetzförderer 18a über die Übergabe 20 des jeweiligen Eintragsförderers 7a, 7b hinaus durch eine Verlängerung 23a, 23b erweitert ist. Damit wird das aus dem jeweiligen Kompostiermodul 1a, 1b ausgetragene Rottegut über den jeweiligen Umsetzförderer 18a, 18b und die Verlängerung 23a, 23b dem jeweiligen Eingang des nachgeschalteten Kompostiermoduls zugeführt.

Wie bereits schon im allgemeinen Teil erläutert, sind alle Zuführungen 10a, 10b, 10c parallel durch eine Eintragsstrecke 21 miteinander verbunden, und auch alle Austräge 15a, 15b, 15c sind durch eine parallele Austragsstrecke 22 miteinander verbunden.

Auf diese Weise ist es möglich, dass bei einem Schaden am Kompostiermodul 1a das Kompostiergut über die Eintragsstrecke 21 sofort der Zuführung 10b des zweiten Kompostiermoduls 1b zugeführt wird und von diesem aus das Rottegut entsprechend bearbeitet und danach dem Kompostiermodul 1c zugeführt wird.

Es können also dank der Eintragsstrecke 21 unterschiedliche Kompostiermodule 1a, 1b, 1c wahlweise beschickt werden; es ist allerdings auch eine Parallelbeschickung möglich.

Gleiches gilt auch für die Austragsstrecke, wo bestimmte Austräge 15a, 15b, 15c von der Austragsstrecke 22 abgekoppelt werden können.

Figur 4 zeigt einen sogenannten Tunnelblock, der insgesamt aus fünf Kompostiermodulen besteht. Ein solches Kompostiermodul wurde bereits anhand der Figuren 1 und 2 beschrieben.

Kennzeichnend für den dargestellten Tunnelblock ist, dass er insgesamt als Serienschaltung der Kompostiermodule oder als Parallelschaltung betrieben werden kann.

Von einer Übergabe 8 wird das Rottematerial auf einen Steigförderer (Umsetzförderer 18) aufgegeben, auf dem das Material in Pfeilrichtung 19 einer Übergabe 20 zugeführt wird. Dort wird das Material in einen gleichfalls horizontal arbeitenden Eintragsförderer übergeben, der als Bandförderer, Kettenförderer oder jeder beliebige andere Längsförderer ausgebildet sein kann.

Der Eintragsförderer hat eine Reihe von separat gesteuerten Auswurföffnungen 9, die in Abhängigkeit von der Stellung des Eintragsförderers über dem jeweiligen Modul 1 geöffnet und geschlossen werden können.

Soll der Tunnelblock nach Figur 4 als Parallelschaltung der Kompostiermodule 1 gefahren werden, dann wird das Material, welches an der Übergabe 20 auf den Eintragsförderer 7 gelangt, über eine bestimmte Zeit lang dem ersten Kompostiermodul 1a zugeführt, welches das Material in Querrichtung gegen einen Ausgang fördert.

Das restliche Material wird ebenfalls über eine Zeit lang bei geöffneten Auswurföffnungen 9 auch dem parallel hierzu betriebenen Kompostiermodul 2b zugeführt, ebenso wie dem Kompostiermodul 1c, 1d und 1e.

Eine Tagescharge des Rottegutes wird somit in fünf Teile aufgeteilt, und jeder Teil wird einem Kompostiermodul 1a - 1e zugeführt.

Das Material wird nun in Pfeilrichtung 4 in dem jeweiligen Kompostiermodul 1a - 1e geführt.

Im Sinne der Beschreibung nach Figur 2 wird am Austragsende eine Fräsvorrichtung 13a - 13e in Betrieb gesetzt, die das gegen die Fräsvorrichtung geförderte Material zerkleinert, auflockert und in den Austragsförderer 14 hinein fördert, wo das Material im Umlaufbetrieb in der Pfeilrichtung 17 wieder dem oberen Umsetzförderer 18 zugeführt wird.

In einer anderen Betriebsweise des Austragsförderers 14 kann auch die Förderrichtung umgekehrt werden und das Material in Pfeilrichtung 16 einem Austrag 15 zugeführt werden.

Hieraus ergibt sich, dass ein ständiger Umlaufbetrieb vorgesehen werden kann und die einzelnen Kompostiermodule 1a - 1e parallel betrieben werden.

Es kann auch ein völlig anderes Verfahrensschema gewählt werden, das wie folgt abläuft:

Ein Tagesbedarf des zur Verarbeitung des Rottegutes wird über die Übergabe 8 und den Umsetzförderer 18 der Übergabe 20 zugeführt und vollständig bei geöffneten Auswurföffnungen 9 in das erste Kompostiermodul 1a eingeleitet und dort entsprechend dem Zeitablauf verarbeitet und gesteuert gegen die am Auslaufende angeordnete Fräsvorrichtung 13 gefördert.

Wenn das Material vollständig in dem ersten Kompostiermodul 1a verarbeitet wurde, wird dieses Material in Pfeilrichtung 17 auf dem Austragsförderer 14 vollständig ausgetragen, dort auf den Umsetzförderer 18 übergeben und über die Übergabe 20 nun dem zweiten Kompostiermodul 1b zugeführt, welches dieses bereits schon voraufbereitete Material nun vollständig aufnimmt.

Alle anderen Kompostiermodule 1c und 1e sind noch leer.

In einem weiteren Rotteprozess wird das schon aufbereitete Rottematerial in dem Kompostiermodul 1b weiter verarbeitet, während in dem ersten Kompostiermodul 1a frisches Rottegut eingefüllt wird.

Nach der entsprechenden Verarbeitung des Rottegutes in dem Kompostiermodul 1b wird dieses wiederum über den Austragsförderer 14 ausgetragen, auf den Umsatzförderer 18 gegeben und vollständig nun in das weitere Kompostiermodul 1c übergeben, wo es wiederum verarbeitet wird.

Das Rottegut aus dem Kompostiermodul 1a wird in das Kompostiermodul 1b umgefüllt, und das vorher erwähnte Rottegut wird nun in dem Kompostiermodul 1c verarbeitet.

Auf diese Weise erfolgt das chargenweise Verarbeiten des Rottegutes zeitlich hintereinander gestaffelt, wobei sehr lange Durchlaufzeiten möglich sind.

Am Schluss kann dann das gesamte Rottegut aus allen Kompostiermodulen ausgetragen werden oder sie werden ständig in diesem Kreislauf betrieben.

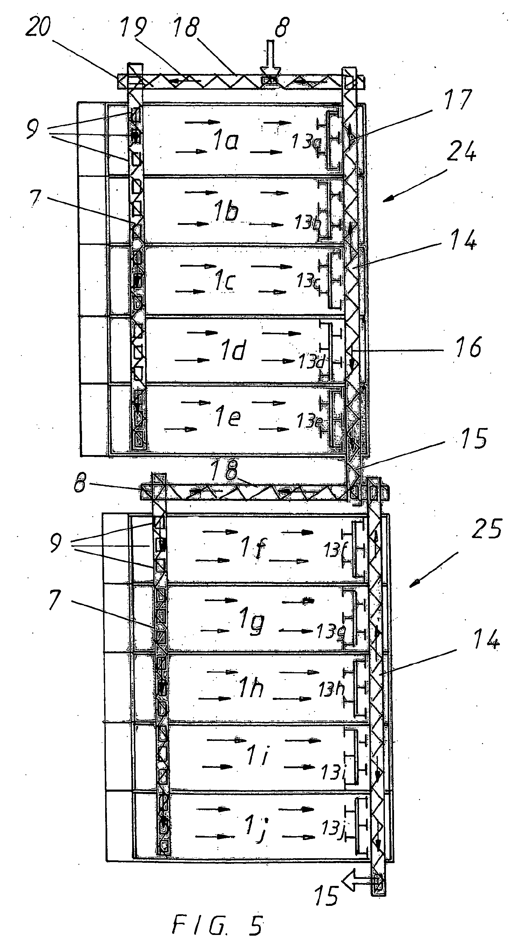

Die Figur 5 zeigt im wesentlichen die Vervielfachung der Anordnung nach Figur 4, so dass für die Figur 5 die gleichen Verfahrensbeschreibungen gelten wie für die Figur 4. Wichtig ist jedoch, dass der vorher beschriebene Tunnelblock 24 nun eine Übergabe auf einen nachgeschalteten Tunnelblock 25 hat.

Die Übergabe besteht in der vorher beschriebenen Weise aus dem Umsetzförderer 18, welcher das Material von dem Austrag 15 des Tunnelblocks 24 übernimmt und nun in den vorher beschriebenen zwei verschiedenen Verfahrensbetriebsweisen dem nächsten, nachgeschalteten, Tunnelblock 25 übergibt.

Der Vollständigkeit halber sei noch erwähnt, dass die einzelnen Kompostiermodule - nach den Figuren 1 bis 3 - und auch die Tunnelblöcke 24, 25 nach den Figuren 4 und 5 unter Luftabschluss arbeiten.

Das jeweilige Kompostiermodul 1 ist so gekapselt, dass ein Austritt der sich darin entwickelnden Gase nicht vorkommt. Vielmehr wird das Rottegut in den einzelnen Kompostiermodulen 1a - 1e dauernd belüftet, so dass ein aerober Abbau stattfindet.

Die in das System eingeblasene Frischluft wird ständig abgesaugt und biologisch oder thermisch aufbereitet, so dass diese Luft im Kreislauf gefördert wird.

Durch die Anordnung von einzelnen Kompostiermodulen in Tunnelblöcken 24, 25 ergibt sich der Vorteil, dass durch den Umlaufbetrieb ein intensiver, aerober Abbau stattfindet und somit kurze Durchlaufzeiten erreicht werden.

Umso intensiver das Material in dem einzelnen Kompostiermodul bewegt wird, desto größere, neue Oberflächen werden geschaffen und desto intensiver ist auch der Abbau im Rottegut.

Es können nämlich sehr kurze Verweilzeiten in den einzelnen Kompostiermodulen bei relativ hoher Fördergeschwindigkeit vorgesehen werden, weil das Material stufenweise von dem einen Kompostiermodul in das andere, nachgeschaltete, Kompostiermodul gebracht wird. Auf diese Weise können relativ hohe Fördergeschwindigkeiten und hohe Umsetzgeschwindigkeiten erreicht werden, was zu einer qualitativ hochwertigen Aufbereitung des Rotteguts in kurzer Zeit führt.

Vorteil des Systems ist, dass die Tunnelblöcke 24, 25 völlig autark sind, d. h. es bedarf keiner Vorhallen, Aufbereitungsstellen und anderer außenliegender Auslagerungsplätze, weil das Rottegut ständig unter Luftabschluss im Kreislauf geführt wird.

Andere bekannte Aufbereitungssysteme nehmen das Rottegut aus dem Kreislauf heraus und lagern es in Hallen oder Vorplätzen zwischen, um es dann wieder in den Rotteprozess einzubringen, was mit hohen Geruchsbelästigungen verbunden ist. Dies vermeidet die Erfindung. Der Stand der Technik beschreibt nicht die Möglichkeit, dass man das Rottegut aus einem Modul herausnehmen kann und in das gleiche Modul wieder zurück führen kann. Dies ist ein wesentlicher Vorteil der Erfindung.

Die Zwangsläufigkeit in der Abfolge der Ansteuerung der einzelnen Module wird bei der Erfindung vermieden, weil die Kompostiermodule 1a - 1e in unterschiedlichen Verfahrensabfolgen betrieben werden können.

Insgesamt ergibt sich mit den verfahrensmäßigen Merkmalen und der beschriebenen Vorrichtung der wesentliche Vorteil, dass die gesamte Verrottung im geschlossenen System stattfindet, dass die Kompostiermodule sehr klein bauen und vollständig gekapselt arbeiten und dass deshalb auf eine aufwändige Tunnelvorhalle verzichtet werden kann.

Durch die unterschiedliche Kombination der Kompostiermodule untereinander und durch die Möglichkeit, einen wahlweisen Umlauf- oder Durchlaufbetrieb zu gestalten, ist es möglich, das Rottegut in vielfältiger Weise zu behandeln und den Anforderungen genau anzupassen.

Der hermetische Abschluss der Kompostiermodule bedeutet, dass umweltschädliche Emissionen nicht entweichen können. Dennoch ist es vorgesehen, dass das Rottegut belüftet wird und dass die Belüftungsluft abgedichtet aus dem jeweiligen Kompostiermodul herausgeführt und einer Abluftreinigung zugeführt wird.

### Zeichnungslegende

- 1: Kompostiermodul 1a - 1e
- 2: Kasten
- 3: Transportboden
- 4: Pfeilrichtung
- 5: Rottegut
- 6: Antrieb
- 7: Eintragsförderer
- 8: Übergabe
- 9: Auswurföffnung
- 10: Zuführung 10a
- 11: Pfeilrichtung
- 12: Pfeilrichtung
- 13: Fräsvorrichtung
- 14: Austragsförderer
- 15: Austrag
- 16: Pfeilrichtung
- 17: Pfeilrichtung
- 18: Umsetzförderer
- 19: Pfeilrichtung
- 20: Übergabe
- 21: Eintragsstrecke
- 22: Austragsstrecke
- 23: Verlängerung a, b
- 24: Tunnelblock
- 25: Tunnelblock

## Patentansprüche

1. Verfahren zum Betrieb einer mehrstufigen Kompostieranlage, bei dem das Rottegut (5) in einem hermetisch abgeschlossenen Kompostiermodul (1) lagert und nach Ablauf der Lagerzeit in ein weiteres Kompostiermodul (1) verbracht wird, **dadurch gekennzeichnet, dass** jedes Kompostiermodul wahlweise auch mindestens zeitweilig im Umlaufbetrieb arbeitet.

2. Verfahren nach Anspruch 1, **dadurch gekennzeichnet, dass** das Rottegut (5) während der Lagerzeit im Kompostiermodul (1) am Ausgang ausgetragen und dem Eingang wieder zugeführt wird (Umlaufbetrieb).

3. Verfahren zum Betrieb einer mehrstufigen Kompostieranlage nach Anspruch 1 oder 2, **dadurch gekennzeichnet, dass** das Kompostiermodul (1) wahlweise vom Durchlaufbetrieb auf den Umlaufbetrieb umgeschaltet wird.

4. Verfahren zum Betrieb einer mehrstufigen Kompostieranlage nach einem oder mehreren der Ansprüche 1 bis 3, **dadurch gekennzeichnet, dass** mehrere Kompostiermodule (1a-c) in der Art einer Serienschaltung hintereinander geschaltet sind und dass das Rottegut (5) nacheinanderfolgend die einzelnen Kompostiermodule (1a-1c) durchläuft.

5. Verfahren zum Betrieb einer mehrstufigen Kompostieranlage nach Anspruch 4, **dadurch gekennzeichnet, dass** mindestens die Zuführungen (10a-c) durch eine diese verbindende Eintragsstrecke (21) parallel geschaltet sind und dass das Rottegut (5) wahlweise über die Einspeisung in die Eintragsstrecke (21) einer oder mehrerer der Zuführungen (10a - 10c) des jeweiligen Kompostiermoduls (1a-1c) zugeführt wird.

6. Verfahren zum Betrieb einer mehrstufigen Kompostieranlage nach Anspruch 5, **dadurch gekennzeichnet, dass** auch die Austräger (15a-c) durch eine diese verbindende Austragsstrecke (22) verbunden sind und dass das Rottegut (5) wahlweise über die Ausleitung in der Austragsstrecke (22) einer oder mehrerer der Austräger (15a - 15c) des jeweiligen Kompostiermoduls (1a-1c) ausgeleitet wird.

7. Verfahren zum Betrieb einer mehrstufigen Kompostieranlage nach einem der Ansprüche 1 bis 6, **dadurch gekennzeichnet, dass** die Austragsmenge von dem ersten Kompostiermodul auf den Eintrag des darauf folgenden Kompostiermoduls stets im wesentlich gleich bleibend ist und dass bei Substanzverlust der Rottemenge (5) die Transportgeschwindigkeit im Kompostiermodul (1b-1c) verringert wird (Rotteverlustkompensation)

8. Verfahren zum Betrieb einer mehrstufigen Kompostieranlage nach einem der Ansprüche 1 bis 7, **dadurch gekennzeichnet, dass** die in einem Tunnelblock (24, 25) zusammengefassten Kompostiermodule (1a- 1e) wahlweise als Serienschaltung oder als Parallelschaltung betrieben werden.

9. Mehrstufige Kompostieranlage, bei der das Rottegut (5) in einem hermetisch abgeschlossenen Kompostiermodul (1) lagert und nach Ablauf der Lagerzeit in ein weiteres Kompostiermodul (1) verbracht wird, **dadurch gekennzeichnet, dass** das Kompostiermodul (1a-1c) einen Transportboden (3) aufweist, auf dem das Rottegut (5) von der Eintragsseite zur Austragsseite transportiert wird (Durchlaufbetrieb).

10. Mehrstufige Kompostieranlage, bei der das Rottegut (5) in einem hermetisch abgeschlossenen Kompostiermodul (1) lagert und nach Ablauf der Lagerzeit in ein weiteres Kompostiermodul (1) verbracht wird, **dadurch gekennzeichnet, dass** das Kompostiermodul (1a-1c) einen Transportboden (3) aufweist, auf dem das Rottegut (5) von der Eintragsseite zur Austragsseite transportiert wird und dass auf der Austragsseite ein Umsetzförderer (18) angeordnet ist, der das Rottegut (5) wieder der Eintragsseite zuführt, (Umlaufbetrieb).

11. Mehrstufige Kompostieranlage nach einem der Ansprüche 9 und/oder 10, **dadurch gekennzeichnet, dass** sie nach dem Verfahren nach einem oder mehreren der Ansprüche 1 bis 8 arbeitet.

12. Mehrstufigen Kompostieranlage nach einem der Ansprüche 9 bis 11, **dadurch gekennzeichnet, dass** der Transportboden (3) des Kompostiermoduls (1a-1c) als Lamellenförderer ausgebildet ist.

13. Mehrstufigen Kompostieranlage nach einem der Ansprüche 9 bis 12, **dadurch gekennzeichnet, dass** der Transportboden (3) des Kompostiermoduls als Gurt- oder Kettenförderer ausgebildet ist.

14. Mehrstufigen Kompostieranlage nach einem der Ansprüche 7 bis 13, **dadurch gekennzeichnet, dass** in Austragsnähe des Kompostiermoduls (1 a-1c) eine Fräsvorrichtung (13 angeordnet ist, die das Rottegut (5) bearbeitet.

15. Mehrstufige Kompostieranlage nach einem der Ansprüche 7 bis 14, **dadurch gekennzeichnet, dass** die Austragsseite aller in einem Tunnelblock (24, 25) parallel angeordneter Kompostiermodule (1a-1e) mit der Eintragsseite aller Kompostiermodule (1a-1e) verbunden ist.

16. Mehrstufige Kompostieranlage nach einem der Ansprüche 7 bis 15, **dadurch gekennzeichnet, dass** mehrere Tunnelblöcke (24, 25) hintereinander geschaltet sind und die Austragsseite des ersten Tunnelblocks (24) mit der Eintragsseite des nachgeschalteten Tunnelblocks (25) verbunden ist.
